(19) Europäisches Patentamt
European Patent Office
Office européen des brevets

(11) **EP 4 257 840 B1**

(12) **EUROPEAN PATENT SPECIFICATION**

(45) Date of publication and mention
of the grant of the patent:
**02.10.2024  Bulletin 2024/40**

(21) Application number: **23166696.7**

(22) Date of filing: **05.04.2023**

(51) International Patent Classification (IPC):
**F16D 66/00** (2006.01)    **G01N 19/00** (2006.01)
**G01N 19/08** (2006.01)

(52) Cooperative Patent Classification (CPC):
**B60T 17/221;** F16D 65/092; F16D 2250/0092

(54) **SYSTEM AND METHOD FOR ONLINE QUALITY TESTING ON BLOCKS OF FRICTION MATERIAL OF VEHICLE BRAKE ELEMENTS, IN PARTICULAR BRAKE PADS**

SYSTEM UND VERFAHREN ZUR ONLINE-QUALITÄTSPRÜFUNG AN BLÖCKEN AUS REIBMATERIAL VON FAHRZEUGBREMSELEMENTEN, INSBESONDERE BREMSBELÄGEN

SYSTÈME ET PROCÉDÉ DE CONTRÔLE DE QUALITÉ EN LIGNE DE BLOCS DE MATÉRIAU DE FRICTION D'ÉLÉMENTS DE FREIN DE VÉHICULE, EN PARTICULIER DE PLAQUETTES DE FREIN

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **06.04.2022  IT 202200006797**

(43) Date of publication of application:
**11.10.2023  Bulletin 2023/41**

(73) Proprietor: **ITT Italia S.r.l.**
**20020 Lainate (MI) (IT)**

(72) Inventors:
• **LORENZATTO, Gianluca**
**12032 BARGE (CN) (IT)**
• **AIRAUDO, Manuela**
**12032 BARGE (CN) (IT)**
• **STRADA, Ivo**
**12032 BARGE (CN) (IT)**
• **ROSTAN, Moreno**
**12032 BARGE (CN) (IT)**
• **GIRAUDO, Paolo**
**12032 BARGE (CN) (IT)**

(74) Representative: **Studio Torta S.p.A.**
**Via Viotti, 9**
**10121 Torino (IT)**

(56) References cited:
**WO-A2-2018/042382    JP-A- H0 483 927
US-A1- 2020 191 220**

**Description**

Technical Field

The present invention relates to a testing system for carrying out an online quality testing of friction blocks or pads of vehicle braking elements, like brake shoes or brake pads, in particular brake pads.

The testing system of the invention may include a number of associated operating devices/stations to handle and test in parallel and/or sequentially a plurality of braking elements at the end of a production line thereof and/or before their packaging and delivery to the market to check the kind and/or the conformity to the required standards of the friction material they are made of.

The invention further relates to an associated method of testing the quality of braking elements and/or of the type of the friction material they are made of.

More generally, the invention relates to a testing system and method to detect the type of the friction material forming friction blocks or pads carried by a support, like in the braking elements.

Prior Art

The braking elements for vehicles generally comprise a friction material block and a support therefor, to which the friction material block is bonded, e.g. by gluing or other methods.

Depending on the model of vehicle they are intended for, the chemical composition of the friction material block of the brake elements may vary considerably, in particular according to the kind of friction material used, which generally falls for the modern brake elements in one of the two friction material composition groups known as NAO (Non Asbestos Organics) and LS (Low Steel).

Within each of those groups the required chemical composition of the friction material may again vary within fair large ranges and even including or excluding specific materials, depending on the requested braking performance.

During the production phase, human errors could generate a major quality problem, i.e. the introduction in the process flow of e.g. a single (or more) friction material pad of a first type, let say "A" inside a batch of friction material pads of a second type, let say "B" of different composition.

This kind of quality problem is called ."friction pads mixing" and is considered a major quality problem because different friction materials have different friction coefficients and mixing the pads can lead during braking to performance and safety problems in the vehicle they are intended for.

Accordingly, in the last stage of the production phase, a control is needed to avoid the "friction pads mixing" quality problem, by intercepting and removing from each batch the brake elements having friction pads eventually made of the wrong composition.

The friction type quality control may be currently performed in two ways :

1) Visual control by an operator, , that involves a human control based solely on the senses, attention and experience of the operator;
2) Automatic color control by a camera, which may be difficult to be carried out, since friction materials of different types may have a very similar color.

In both cases the control not only may be difficult to be carried out but is also expensive.

JPH0483927 A discloses a system to automatically detect defective brake pads, e.g. having cracks or a uneven mixing in the friction material block. The not yet finished brake pad, still to be painted, is driven between two electrodes in the shape of rollers such as to slide in a gap between them, which are pressed one against the friction material block and the other against the metal support (backplate) on the side opposite the friction material block. During the passage an electric current is fed to the roller electrodes and the impedance of the system so obtained is measured.

However this system, though able in theory to detect defective brake pads, may also not to be reliable in order to solve the "friction pads mixing" problem and may be complex to be implemented in a working environment, due to the presence of dust.

Summary of the Invention

It is an object of the present invention to provide an enhanced testing system for carrying out an online quality testing of vehicle braking elements, like brake shoes or brake pads, free from the drawbacks of the prior art and in particular which is reliable, easy to be implemented and substantially insensitive to the operational environment in which it operates.

Here and below in the present disclosure, the term "system" is to be intended in the meaning of "plant" or "set of cooperating or operatively associated devices".

It is further an object of the present invention to provide such a testing system including a number of associated operating devices/stations to handle and test in parallel and/or sequentially a plurality of braking elements at the end of a production line thereof and/or before their packaging and delivery to the customers to detect the friction material employed to make the friction material block equipping the same, and possibly remove from the production/packaging line the braking elements unrelated to those of the batch intended to be produced/delivered, so as to completely solve in a reliable manner the "friction pads mixing" problem.

It is moreover an object of the invention to provide an enhanced associated method for testing the quality of braking elements and/or of the type of the friction material used to mold their friction material blocks. This testing method is a "poka-yoke" type control.

More generally, it is an object of the invention to provide a testing system and method able to identify the type of a friction material present in a friction material block or pad provided on a support, e.g. a metallic support, preferably but not exclusively for application to braking elements.

According to the present invention a testing system for friction material blocks or pads, preferably but not exclusively applied to braking elements for vehicles, more preferably to a brake pad, and an associated method are therefore provided as defined in the appended claims.

In particular, the system and method of the invention are aimed to carry out an online quality testing of vehicle braking elements like brake shoes or brake pads, each comprising a support and a block or pad of friction material carried by the support, in order to identify, e.g. at the end or along a production line, the friction material the block or pad of the bake element under test is made of, and possibly discard a tested brake element having the friction material thereof made of an undesired or unrecognized type, e.g. produced by mistake or defective or merely pertaining to a different batch of brake elements designed to use a different type of friction material, e.g. produced in the same or in a parallel line, and accidentally mixed up by the batch currently under production.

According to embodiments of the present invention, the testing system comprises at least a holding device configured to hold a first and second electrode arranged stationary and side by side with a prefixed gap left between them and substantially laying on a same plane, the first and second electrode and the holding device being configured to receive a first and the same face, opposite to the support, of the friction material block or pad of each element to be tested, simultaneously in contact with the first and second electrode to form with the electrodes an electric circuit closed through a portion of the friction material block or pad arranged in the gap between the first and second electrode.

A numerically controlled manipulator withdraws one at a time each element to be tested from a collecting or transport element therefor, e.g. a conveyor, to bring each element to be tested against the couple of stationary first and second electrodes; then an electric generator is activated to make an electric current to flow in the electric circuit through the portion of friction material arranged in the gap between the electrodes and a metering device detects the electric resistance or the impedance of the friction material, depending on whether the test is carried out in DC or AC.

A processing unit is connected to the metering device, to the electric circuit and to the manipulator for controlling them and is configured to firstly detect the type of friction material forming the friction material block or pad of each element to be tested, brought against the first and second electrode, on the basis of the electric resistance or impedance detected by the metering device and to eventually discard via said manipulator the tested elements equipped with a type of friction material different from the desired one.

In a preferred embodiment, the testing system may be configured to test in parallel and/or sequentially a plurality of brake elements at the end of a production line thereof and/or before their packaging to deliver them, the brake elements being arranged laying on a conveyor and the manipulator being configured to hold at least one of them at a time on the side of the support thereof to withdraw each brake element to be tested from the conveyor, press it on the side of the friction material block or pad thereof against the couple of a first and second electrode until the metering device has detected the electric resistance or impedance and to bring back each tested brake elements either to a collecting device or collecting box or element, e.g. the same or another conveyor, or to a scrap box or element, e.g. another conveyor.

In different embodiments, the holding device may consist of an holding tower arranged close to both the manipulator and the collecting or transport element for the brake element to be tested; each first and second electrode is carried by a corresponding first and second guided slide element independently of each other, the first and second guided slide element being supported by the holding tower mobile against the action of elastic elements, e.g. springs or pneumatic or hydraulic pistons, in a direction perpendicular to the laying plane of the electrodes, in such a manner to keep the gap between the electrodes constant.

The electric circuit may comprise two branches connected to the electric generator in parallel, a first branch including in series a pre-established and known sample electric resistance, preferably replaceable, and a second branch including in series the first and second electrode and the gap established between them.

Brief Description of Drawings

Preferred but not limiting embodiments of the invention will be now described in more detail with reference to a number of practical working examples of implementation thereof which are solely intended to disclose in a non-exhaustive and not limiting manner the feature which are part of the content of the present invention, and with reference to the figures of the attached drawings, in which:

- Figure 1 shows in a schematic way the principle of operation of the testing system and method of the invention;
- Figure 2 shows schematically a three-quarter axonometric view from the above of a first component of the testing system of the invention;
- Figures 3 show schematically the same first component of figure 2 substantially in the same view but with arrows indicating the way of operation thereof;
- Figure 4 shows schematically a step of the method of the present invention making use of the first component of figures 2 and 3;
- Figure 5 shows schematically an overall axonometric view of the testing system of the invention;
- Figure 6 shows schematically the same step of the method of the present invention as shown in figure 4 wherein a further component of the testing system of the invention is also shown schematically; and
- Figure 7 shows a simplified block diagram illustrating the sequence of steps of the method of the invention.

Detailed Description

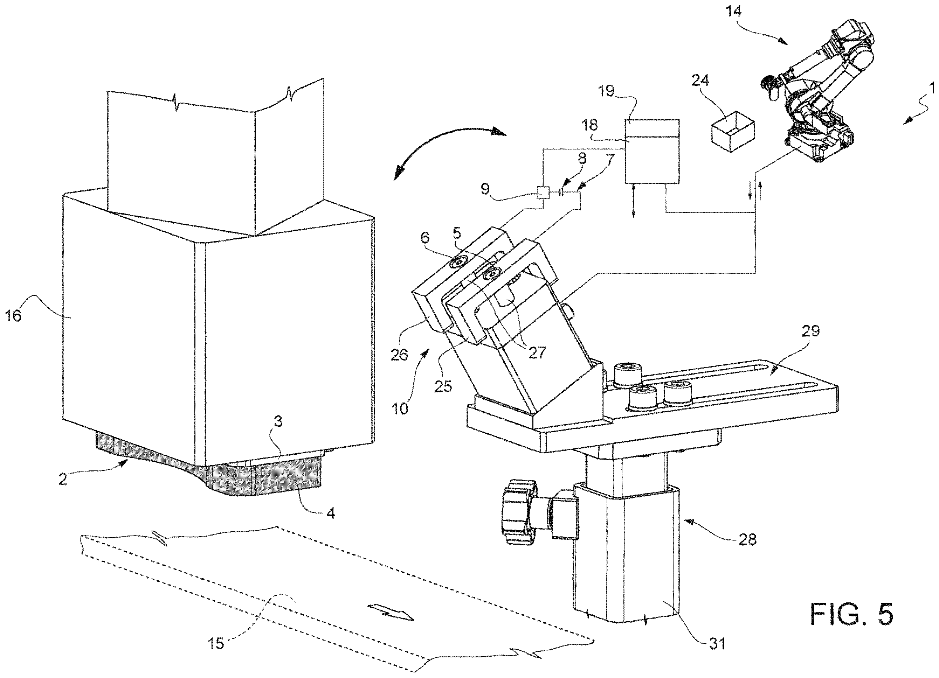

With reference to figures from 1 to 5, the reference number 1 indicates as a whole (figure 5) a testing system for carrying out a quality testing of braking elements 2 for vehicles, e.g. at the exiting of a producing line thereof (known and not shown for sake of simplicity).

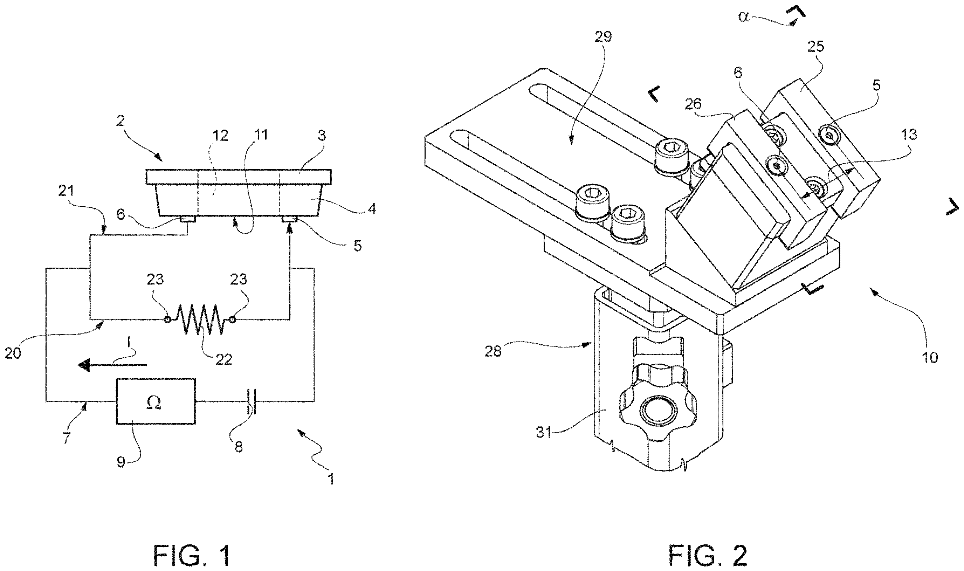

In figure 1 only the strictly necessary elements/components of the testing system 1 are shown in a purely schematic way, in order to schematically show the mode of operation of the testing system of the invention.

Here, and herein below, reference will be made to a braking element constituted by a brake pad, without losing in generality, since the testing system may be applied to other kinds of brake elements, e.g. brake shoes and, if necessary, to any element to be tested composed of, or carrying, a block or pad of friction material to be identified.

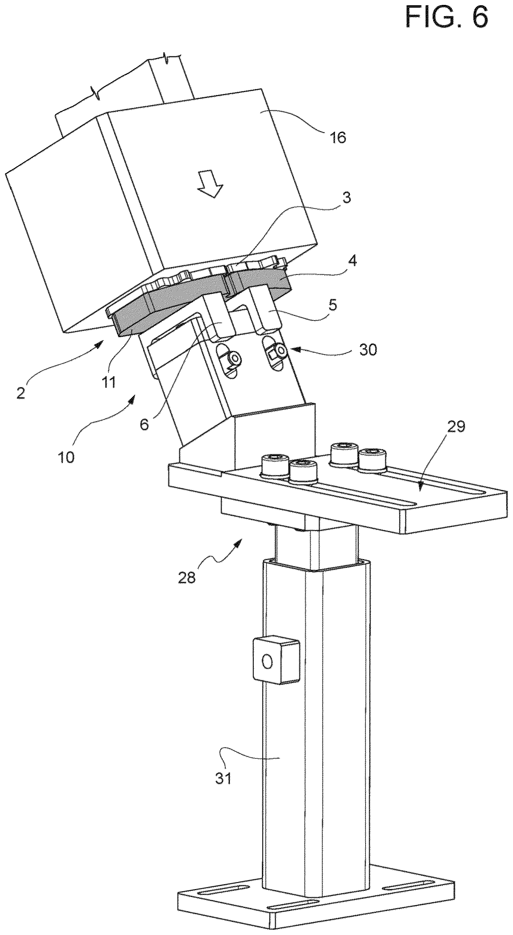

With reference also to figure 6, the braking element 2, more generally the element 2 to be tested, comprises a support 3, in the case in point a metallic back plate 3 of a brake pad 2, a block 4 formed of a molded friction material and carried integral by the support 3 and a damping layer (known and not shown in the figures for sake of simplicity) normally interposed between the support 3 and the friction block 4.

The testing system 1 comprises (figures 1 and 5) at least a couple of a first and second electrode, respectively indicated with the reference numbers 5 and 6, configured to cooperate simultaneously in contact with a (brake) element to be tested 2, an electric circuit 7 including the first and second electrodes 5, 6, and an electric generator 8 electrically connected to the electric circuit 7.

The electric circuit 7 is of the kind normally open between the first and second electrode 5, 6 since it is configured to let an electric current "I" (figure 1) to flow between the first and second electrode 5, 6 when the (brake) element 2 to be tested is arranged in contact with the electrodes 5, 6 so as to close the electric circuit 7.

The testing system 1 further comprises a metering device 9 of any known kind, configured to detect either the electric resistance or the impedance present in the electric circuit 7 between the two electrodes 5, 6.

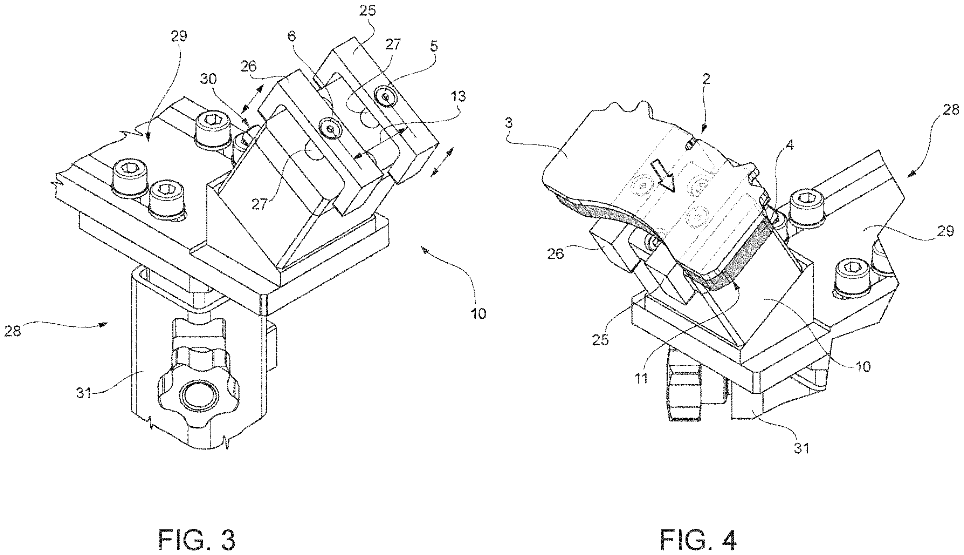

According to a first aspect of the invention, the testing system 1 further comprises at least a holding device 10 (figures 2-6) configured to hold the first and second electrode 5, 6 arranged stationary and side by side, as well shown in the figures, and so arranged so that a prefixed gap 13 is left between them. Moreover, the holding device 10 keeps the electrodes 5, 6 arranged substantially laying on the same plane "alfa" ($\alpha$), as shown in figure 2; the plane $\alpha$ is designed to be / to remain parallel in use to a first face 11 of the block or pad 4 of friction material. The face 11 is facing opposite the support 3, i.e. is arranged on the side of the friction material block 4 opposite to the metallic support or back plate 3.

According to an aspect of the invention, therefore, the first and second electrode 5, 6 and the holding device 10 are configured to receive the first and the same face 11 of the friction material block or pad 4 of each brake element 2 to be tested, opposite to the brake element support 3, simultaneously in contact with both the first and second electrode 5, 6 to close the electric circuit 7 solely through a portion 12 of the friction material block or pad 4, shown schematically in dotted lines in figure 1 only. The portion 12 is in use that one arranged in the gap 13 between the first and second electrode 5, 6.

According to another aspect of the invention, the testing system 1 also comprises a numerically controlled manipulator 14 (figure 5) of any possible type, e.g. a known robotized arm having three or more numerically controlled axes, configured to withdraw one at a time each (brake) element 2 to be tested from a collecting or transport element 15 for the same, e.g. as shown in dotted lines in the non-limiting example of figure 5, a conveyor 15.

The robot/robotized arm 14 is configured to hold each brake element 2 to be tested in a known manner by means of a holding head 16 thereof of any known type (only very schematically shown in the figures as a cube), e.g. provided by pliers, suction means or magnets) and bring each element to be tested against the at least one couple of stationary first and second electrodes 5,6.

Of course, in the event the testing is to be carried out in parallel on more than one brake element 2 at a time, the system 1 will be provided with more than one testing station constituted by the couple of flanked electrodes 5,6, e.g. a plurality of couples of electrodes 5,6 supported by the same, or by a plurality of, holding device (s) 10 and served by the same robot 14 equipped with a multiple head or by a corresponding number of manipulators 14, identical or not, arranged in a suitable manner.

Finally, the testing system according to the invention also may comprise a processing unit 18 (figure 5) connected in known manner, e.g. by means of data wires, to the metering device 9 to receive the readings thereof, to the electric circuit 7 to switch on and off the electric generator 8, and to the manipulator/robot 14 to operate it according to a desired program. Substantially, the processing unit 18 is configured to receive/send input/output data to and from the components 7, 8, 9 and 14 of the testing system land to control them all.

Moreover, the control or processing unit 18 (CPU) is configured to firstly detect the type, as it will be seen, of friction material forming the friction material block or pad 4 of each (brake) element 2 to be tested brought against the first and second electrode 5,6 and to eventually discard via said manipulator 14 the (brake) elements 2 equipped with a type of friction material different from a desired one, e.g. one brake pad 2 equipped with an LS friction material block 4 accidentally mixed up with a batch of brake pads 2 to be equipped with a NAO friction material block 4.

According to a main aspect of the invention, the type of friction material forming each block or pad 4 equipping each element 2 to be tested is detected / recognized with high precision and in a reliable manner on the basis of the value of the electric resistance or impedance detected by the metering device 9 when the electric generator 8 is activated by the CPU 18 after that the robot 14 has brought the face 11 of a block or pad 4 of an element 2 to be tested against both the electrodes 5,6 simultaneously.

To this purpose, the processing unit 18 comprises at least one register 19 (or any other kind of uploadable memory means) configured to memorize in it ranges of average electric resistance or impedance values for each type of desired friction material, i.e. the acceptable range of resistance/impedance values that a determined type of friction material usually employed to mold the block/pads 4 may show/have, and this for all the types of friction materials possibly employed to manufacture the friction material blocks or pads 4.

Such ranges of values of electric resistance / impedance "typical" of each kind of possible friction material usually employed to manufacture the (brake) elements 2 , have to be previously (i.e. before implementing the testing system 1) determined experimentally in known manner, e.g. with the aid of a suitable experimental appliance, which is not part of the invention.

In other words, all the materials the friction material block or pads 4 may be made of have to be firstly characterized in their electric behavior in known manner and then the resulting experimental values so obtained may be loaded in register 19.

According to an aspect of the invention, in fact, the processing unit 18 is configured to compare each time such memorized values of resistance/impedance with those detected by the metering device 9 to decide whether the brake element 2 currently arranged against the first and second electrode 5,6 is acceptable or not.

In other words, if for hypothesis the average value for a desired known NAO composition of friction material is 5 and it is known that for an undesired LS composition is 10 (values of fantasy having no relevance with real resistance values, which may vary from tenth of Ohm to Mega Ohm) and the CPU 18 receives a value of e.g. 4.9, it may conclude that the tested element 2 is good and acceptable, while if the received value is 9.8 the CPU 18 may conclude that the brake element 2 having scored that value is not acceptable, because it is likely an element 2 having the friction material block 4 thereof made of an LS friction material, instead of a desired NAO material.

The electric generator 8 is configured to apply to the electric circuit 7 a pre-established voltage. The generator 8 may be chosen to work either in DC or AC. Preferably, the generator 8 is configured to apply the circuit 7 a voltage (tension) in DC.

The metering device 9 is accordingly configured, when the applied voltage is in DC, to detect the electric current established between the first and second electrode and to calculate the electric resistance of the portion 12 of the friction material block or pad 4 comprised between the first and second electrode 5,6, by applying the Ohm law.

In case of a generator 8 operating in AC, the metering device 9 will be configured to detect the impedance, instead of the electric resistance, present in the interested part of the circuit 7.

When the testing system 1 operates in DC, the electric circuit 7 is configured as schematically shown in figure 1 and comprises two branches 20, 21 connected to the electric generator 8 and to the metering device 9 electrically in parallel.

A first branch 20 includes, connected to it in series, a sample electric resistance 22 of a pre-established and known value and a second branch 21 includes, connected electrically in series to it, the first and second electrode 5, 6 and the gap 13 established between them, the gap 13 being configured to be closed by the friction material block or pad 4 of a (brake) element 2 under test resting onto the electrodes 5, 6.

Preferably, the sample electric resistance 22 is replaceable with another one of the same dimension but of different value, e.g. by means of rapid connectors 23 (figure 1), known and not shown in details for sake of simplicity.

In fact, in order to cover the whole electric resistance range from low resistance friction material to high resistance friction materials using a same analogic measuring card (the metering device 9), the Ohm's law of electrical parallel circuits is preferably applied: a parallel circuit is used to normalize the whole range of friction material electric resistance from e.g. 0 (zero) Ohm to 5600 Ohm (5600 Ohm is both the value of the sample electric resistance and the maximum value measurable by the analogic measuring card) according to the equation:

$$[1] \quad \frac{1}{R_{Measured}} = \frac{1}{R_{Sample}} + \frac{1}{R_{Friction\ material}}$$

Measuring the total resistance of the parallel circuit made by the sample resistance 22 (of 5600 Ohm) and the friction material resistance, the intrinsic resistance of the friction material is then calculated.

In fact, knowing the $R_{sample}$ resistance and measuring the $R_{measured}$ it is easy to calculate the $R_{friction}$ material, using the Ohm's law of electrical parallel circuits.

If $R_{measured}$ tends to the maximum value detectable by the analogic measuring card (5600 Ohm), the $R_{friction}$ material tends to high resistivity values ($10^6$ Ohm). If, instead, $R_{measured}$ tends to the minimum value detectable by the analogic measuring card (0 Ohm), the $R_{friction}$ material tends to low resistivity values (0 ohm).

By replacing the sample resistance 22 with another one of different value (different from 5600 Ohm) it is possible therefore manage also measured resistances of the order of Mega Ohm using the same metering device 9.

The testing system 1 is configured to test in parallel and/or sequentially a plurality of brake elements 2 at the end of a production line thereof (known and not shown, except for the conveyor 15) and/or before their packaging to deliver them to the market (in the event it is foreseeable that a mix up of the elements 2 may happened in the post-production area) .

The brake elements 2 are arranged laying on the conveyor 15 with their face 11 facing the conveyor 15 and in contact therewith. The manipulator 14 is configured to hold with its head 16 at least one of the element 2 at a time on the side of the support 3 thereof to withdraw each brake element 2 to be tested from the conveyor 15, press it on the side of the friction material block or pad 4 thereof against the at least one couple of a first and second electrode 5,6 until the metering device 9 has detected the electric resistance or impedance of the portion 12 and to bring back each tested brake element 2 either to a collecting device or collecting box element, e.g. to the very same conveyor 15, but downstream the point of withdrawal (in case of an acceptable element 2) or to a scrap box 24 (or another transport element/device, like another conveyor) in case of a non-acceptable element 2, which is so dumped to waste, e.g. for recycling.

According to an aspect pf the invention, the gap 13 is a pre-established and constant gap, so as it is a known constant of the testing system 1.

According to the preferred but non-limiting embodiment shown in the drawings, the holding device 10 consists of an holding tower arranged close to both the manipulator 14 and the collecting or transport element/device 15 for the brake element 2 to be tested.

According to this embodiment, the first and second electrode 5, 6 are carried by a corresponding first and second guided slide element 25, 26 respectively, so as the two electrodes 5, 6 are supported independently of each other by the holding tower 10.

The first and second guided slide elements 25, 26 are, in the embodiment shown, U-shaped and are supported astride the holding tower 10, so as to be mobile (to slide) up and down along a limited length linear path against the action of elastic elements 27 in a direction perpendicular to the laying plane α of the electrodes in such a manner to be able to "float" along such direction but keeping anyway the gap 13 between the electrodes 5, 6 constant.

The holding tower 10 is supported, in the preferred embodiment shown, by a pedestal 28, which is adjustable along three different axes, in the example shown by means of adjustable slides 29,30 (figure 6) and by means of a telescopic stem 31.

The holding tower 10 is preferably arranged tilted on one side with respect to a vertical line, e.g. with respect to the telescopic stem 31, by a pre-established angle of about 45°. This has proved to facilitate the movements of the robotized arm 14 and to reduce the overall bulk of the testing system 1.

From what described above, it is clear that the invention also relates to a method for carrying out an online quality testing of vehicle braking elements 2 like brake shoes or brake pads, and in broader terms of any element 2, each comprising a support 3 and a friction material block or pad 4 carried by the support 3 and made of a friction material of a desired type.

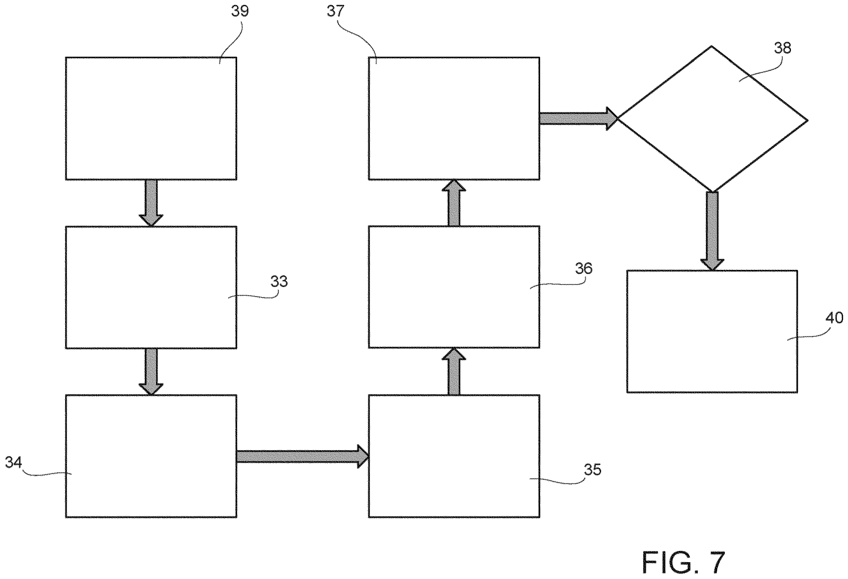

The method according to the invention is schematized in the block diagram (flow chart) shown in figure 7.

The method of the invention comprises in general terms (figure 1) the step of bringing each (brake) element 2 to be tested in contact with at least a couple of a first and a second electrode 5, 6 and having an electric current I to flow between the first and second electrode 5, 6 when the element 2 to be tested is arranged in contact with the first and second electrodes 5, 6.

In more details the testing method of the present invention comprise the steps as follows.

A first step (block 33) of arranging the first and second electrodes 5, 6 stationary and side by side with a prefixed gap 13 left between them, the first and second electrode 5, 6 being arranged substantially laying on a same plane α (see also figure 2).

A second step (block 34) of forming with the first and second electrode 5, 6 an electric circuit 7 fed by an electric generator 8 either in DC or AC, preferably in DC, the electric circuit 7 being left normally open owing to the presence of the gap 13 between the electrodes 5, 6 (figure 2) .

A third step (block 35) of bringing a first and the same face 11 of the friction material block or pad 4 of each (brake) element 2 to be tested, arranged opposite to the support 3 of the brake element 2, in contact with the first and second electrode 5, 6 simultaneously, to close the gap 13 and, at the same time, to close the electric circuit 7 so as to ensure an electric connection between the electrodes 5, 6 (figure 6).

Such electric connection is obtained, according to an aspect of the invention, solely through a portion 12 of the friction material block or pad 4 (figure 1) arranged in the gap 13 between the first and second electrode 5, 6.

A fourth step (block 36) of activating the electric generator 8 so as to establish an electric current I flowing between the first and second electrode 5, 6 through the portion 12 of the friction material block or pad 4 arranged in the gap 13 between the first and second electrode 5, 6.

A fifth step (block 37) of detecting an electric resistance or impedance of the portion 12 of friction material arranged between the first and second electrode 5, 6.

A sixth step (decision block 38) of establishing the type of friction material the friction material block or pad 4 of each element 2 to be tested is made of, by comparing the value of electric resistance or impedance detected in the fifth step with ranges of average values of electric resistance or impedance of a number of different types of friction material previously experimentally established and memorized in a processing unit according to a further (seventh) step (block 39) which is carried out before the first step 33.

An eighth and last step (block 40) of discarding a tested (brake) element 2 if the established type of friction material its friction material block or pad 4 is made of is different from a desired type of friction material previously inputted in the processing unit 18, e.g. in the register 19.

Preferably, a plurality of brake elements 2 are tested in parallel and/or sequentially at the end of a production line thereof (not shown apart from a conveyor 15 in figure 5) and/or before their packaging to deliver them, by laying the brake elements 2 to be tested on the conveyor 15 and withdrawing them from the conveyor 15 by means of a numerically controlled manipulator (robot) 14 to press each of the brake elements 2 to be tested, on the side of the friction material block or pad 4 thereof, against the at least a couple of a first and second electrode 5, 6 until the electric resistance or impedance of the block or pad 4 is detected. This operation is facilitated and made more reliable by the fact that the electrodes 5, 6 are supported in a floating manner by the holding tower 10 owing to the elastic means 27, which may consists merely in coil springs or in any different type of spring, e.t. air spring, hydraulic spring, etc.

After the conclusion of the sixth step, each tested brake element 2 is brought back either to the original (or another) collecting device or box element, like conveyor 15, if the established friction material is a desired one, or to a scrap box element 24 if the established friction material is an undesired one.

The seventh step 39 consists of experimentally testing the electric resistance or impedance of friction materials of known types and adapted to be used to manufacture brake elements 2 having a pre-established braking behavior in order to establish, for each friction material of known type, ranges of average values of the electric resistance or impedance typical and proper solely for that known type of friction material, namely of that type/model of braking element 2. To obtain a reliable range each experiment of each kind of braking element 2 is repeated about 30 times.

Such ranges of values, after acquisition, are then set (e.g. loaded/memorized in the CPU 18 / register 19) in order to compare (in step 38) them with the values established in step 37.

The step 37 is preferably carried out in DC, forming an electric circuit 7 comprising a first and a second branch 20, 21 arranged electrically in parallel, the first branch 20 being equipped with a prefixed sample electric resistance 22, preferably arranged in a replaceable manner, and the second branch 21 bearing along it the first and second electrode 5, 6 and the gap 13 there between.

Accordingly, a system and method simple, reliable and not expensive are established that allow the friction pad mixing drawback to be completely avoided.

All the aims of the present disclosure are therefore fulfilled.

Certain Terminology

Although certain braking devices, systems, and methods have been disclosed in the context of certain example embodiments, it will be understood by those skilled in the art that the scope of this disclosure extends beyond the specifically disclosed embodiments to other alternative embodiments and/or uses of the embodiments and certain modifications and equivalents thereof, like brake shows for braking systems based on brake drums. Use with any structure is expressly within the scope of this invention. Various features and aspects of the disclosed embodiments can be combined with or substituted for one another in order to form varying modes of the assembly. The scope of this disclosure should not be limited by the particular disclosed embodiments described herein.

Conditional language, such as "can," "could," "might," or "may," unless specifically stated otherwise, or otherwise understood within the context as used, is generally intended to convey that certain embodiments include or do not include, certain features, elements, and/or steps. Thus, such conditional language is not generally intended to imply that features, elements, and/or steps are in any way required for one or more embodiments.

Unless stated otherwise, the terms "approximately," "about," and "substantially" as used herein represent an amount close to the stated amount that still performs a desired function or achieves a desired result. For example, in some embodiments, as the context may dictate, the terms "approximately", "about", and "substantially" may refer to an amount that is within less than or equal to 10% of the stated amount. Likewise, the term "generally" as used herein represents a value, amount, or characteristic that predominantly includes or tends toward a particular value, amount, or characteristic.

This disclosure expressly contemplates that various features and aspects of the disclosed embodiments can be combined with, or substituted for, one another.

**Claims**

1.  A testing system (1) for carrying out an online quality testing of friction material blocks or pads (4), in particular applied to vehicle braking elements (2) like brake shoes or brake pads comprising each a support (3) and a block or pad (4) of friction material carried by the support, the testing system (1) comprising at least a couple of a first and second electrode (5,6) configured to cooperate simultaneously in contact with an element (2) to be tested, an electric circuit (7) including said first and second electrodes (5,6), said electric circuit (7) being normally open between said first and second electrode (5,6), an electric generator (8) electrically connected to said electric circuit (7) and configured to let an electric current (I) to flow between the first and second electrode when the element to be tested (2) is arranged in contact with the first and second electrodes (5,6) and closes the electric circuit(7), and a metering device (9) configured to detect either electric resistance or impedance in said electric circuit; wherein:

    i. the testing system (1) further comprises at least a holding device (10) configured to hold said first and second electrode (5,6) arranged stationary and side by side with a prefixed gap (13) left between them and substantially laying on a same plane ($\alpha$);
    **characterized in that**
    ii. said first and second electrode (5,6) and said holding device (10) thereof being configured to receive a first and the same face (11) of the friction material block or pad (4) of each element to be tested, opposite to the support (3), simultaneously in contact with said first and second electrode (5,6) to close said electric circuit (7) solely through a portion (12) of the friction material block or pad (4) arranged in the gap between the first and second electrode.

2.  The testing system (1) of claim 1, **characterized in that** it further comprises:

    iii. a numerically controlled manipulator (14) configured to withdraw one at a time each element (2) to be tested from a collecting or transport element (15) therefor to bring each element to be tested (2) against the at least one couple of stationary first and second electrodes (5,6); and
    iv. a processing unit (18) connected to the metering device (9), the said electric circuit (7) and the said manipulator (14), for controlling them, and configured to firstly detect the type of friction material forming the friction material block or pad (4) of each element to be tested brought against the first and second electrode (5, 6) on the basis of the electric resistance or impedance detected by the metering device (9) and to eventually discard via said manipulator (14) the tested elements (2) equipped with a type of friction material different from a desired one.

3.  The testing system (1) of claim 2, **characterized in that** it is configured to test in parallel and/or sequentially a plurality of braking elements (2) at the end of a production line thereof and/or before their packaging to deliver them, the braking elements (2) being arranged laying on a conveyor (15) and the manipulator (14) being configured to hold at least one of them at a time on the side of the support (3) thereof to withdraw each braking element (2) to be tested from the conveyor (15), press it on the side of the friction material block or pad (4) thereof against said at least a couple of a first and second electrode (5,6) until the metering device (9) has detected said electric resistance or impedance and to bring back each tested braking element (2) either to a collecting device or box element or to a scrap box (24) element.

4. The testing system of anyone of the preceding claims from 1 to 3, **characterized in that** said electric generator (8) is configured to apply to said electric circuit a pre-established voltage either in DC or AC, preferably in DC; the metering device (9) being configured, when the applied voltage is in DC, to detect the electric current established between the first and second electrode (5,6) and to calculate the electric resistance of said portion (12) of the friction material block or pad (4) comprised between said first and second electrode, by applying the Ohm law.

5. The testing system according to claim 4, **characterized in that** said electric circuit (7) comprises two branches (20,21) connected to said electric generator (8) in parallel, a first branch (20) including in series a pre-established and known sample electric resistance (22), preferably replaceable, and a second branch (21) including in series said first and second electrode (5,6) and the gap (13) established between them, said gap (13) being configured to be closed by the friction material block or pad (4) of an element (2) under test resting onto said electrodes.

6. The testing system according to anyone of the preceding claims, **characterized in that** said gap (13) is pre-established and constant.

7. The testing system according to claim 2, **characterized in that** said holding device (10) consists of an holding tower arranged close to both the manipulator (14) and the said collecting or transport element (15) for the element (2) to be tested; each first and second electrode (5,6) being carried by a corresponding first and second guided slide element (25,26) independently of each other, the first and second guided slide element (25,26) being supported by the holding tower (10) mobile against the action of elastic elements (27) in a direction perpendicular to said laying plane of the electrodes in such a manner to keep said gap (13) between the electrodes constant.

8. The testing system according to claim 7, **characterized in that** said holding tower (10) is supported by a pedestal (28) in an adjustable manner and is preferably arranged tilted on one side with respect to a vertical line.

9. The testing system according to anyone of the preceding claims, **characterized in that** said processing unit (18) comprises at least one register (19) configured to memorize in it ranges of average electric resistance / impedance values of each type of desired friction material, such values having been previously determined experimentally; the processing unit (18) being configured to compare such memorized values with those detected by the metering device (9) to decide whether the friction material of the element (2) currently arranged against the first and second electrode (5,6) is acceptable or not.

10. A method for carrying out an online quality testing of friction material blocks or pads (4) carried by a support (3), in particular of vehicle braking elements like brake shoes or brake pads each comprising a support and a block or pad (4) of a friction material carried by the support and made of a friction material of a desired type, the method comprising the step of bringing each element (2) to be tested in contact with at least a couple of a first and a second electrode (5,6) and having an electric current (I) to flow between the first and second electrode when the element to be tested (2) is arranged in contact with the first and second electrodes; wherein the testing method comprise the steps of:

   a) arranging the first and second electrodes (5,6) stationary and side by side with a prefixed gap (13) left between them, the first and second electrode (5,6) being arranged substantially laying on a same plane ($\alpha$);
   b) forming with the first and second electrode an electric circuit (7) fed by an electric generator (8) either in DC or AC, preferably in DC, the electric circuit being left open by said gap (13); **characterized in that** said method further comprises the steps of:
   c) bringing a first and the same face (11) of the friction material block or pad (4) of each element to be tested, arranged opposite to the support (3), in contact with said first and second electrode (5,6) simultaneously, to close said gap (13) and said electric circuit (7) solely through a portion (12) of the friction material block or pad (4) arranged in the gap between the first and second electrode;
   d) activating the electric generator (8) so as to establish an electric current flowing between said first and second electrode through said portion (12) of the friction material block or pad (4) arranged in the gap (13) between the first and second electrode;

e) detecting an electric resistance or impedance of said portion of friction material arranged between the first and second electrode (5,6);

f) establishing the type of friction material the friction material block or pad (4) of each element (2) to be tested is made of, by comparing the value of electric resistance or impedance detected in step e) with ranges of average values of electric resistance or impedance of a number of different types of friction material previously experimentally established and memorized in a processing unit (18).

11. The method of claim 10, **characterized in that** it further comprises the step of:

g) discarding a tested element (2) if the established type of friction material of the friction material block or pad (4) is different from a desired type of friction material previously inputted in said processing unit.

12. The method of claim 10 or 11, **characterized in that** a plurality of braking elements (2) are tested in parallel and/or sequentially at the end of a production line thereof and/or before their packaging to deliver them, by laying the braking elements to be tested (2) on a conveyor (15) and withdrawing them from the conveyor by means of a numerically controlled manipulator (14) to press each of the braking elements to be tested, on the side of the friction material block or pad (4) thereof, against said at least a couple of a first and second electrode (5,6) until said electric resistance or impedance is detected; after the step f) each tested braking elements (2) being brought back either to a collecting device (15) or box element if the established friction material is a desired one, or to a scrap box element (24) if the established friction material is an undesired one.

13. The method of anyone of the preceding claim from 10 to 12, **characterized in that** it comprises the step (39) of experimentally testing the electric resistance or impedance of friction materials of known types and adapted to be used to manufacture brake elements (2) having pre-established braking behavior in order to establish, for each friction material of known type, ranges of average values of the electric resistance or impedance typical and proper solely for that known type of friction material; such ranges of values being then set in order to compare them with the values established in step e).

14. The method according to one of the preceding claims from 10 to 13, **characterized in that** said step e) is carried out in DC, forming an electric circuit (7) comprising a first and a second branch (20,21) arranged electrically in parallel, the first branch (20) being equipped with a prefixed sample electric resistance (22), preferably arranged in a replaceable manner, and said second branch (21) bearing along it said first and second electrode (5,6) and said gap (13) there between.

**Patentansprüche**

1. Prüfsystem (1) zur Durchführung einer Online-Qualitätsprüfung von Reibungsmaterialblöcken oder -platten (4), insbesondere für Fahrzeugbremselemente (2) wie Bremsbacken oder Bremsplatten, die jeweils einen Träger (3) und einen Block oder eine Platte (4) aus Reibungsmaterial aufweisen, der/die von dem Träger getragen wird, wobei das Prüfsystem (1) mindestens ein Paar aus einer ersten und einer zweiten Elektrode (5, 6) aufweist, die so konfiguriert sind, dass sie gleichzeitig in Kontakt mit einem zu prüfenden Element (2) zusammenwirken, einen elektrischen Schaltkreis (7), der die erste und zweite Elektrode (5, 6) enthält, wobei der elektrische Schaltkreis (7) im Normalzustand offen ist zwischen der ersten und der zweiten Elektrode (5, 6), einem elektrischen Generator (8), der elektrisch mit dem elektrischen Schaltkreis (7) verbunden und so konfiguriert ist, dass er einen elektrischen Strom (I) zwischen der ersten und der zweiten Elektrode fließen lässt, wenn das zu prüfende Element (2) in Kontakt mit der ersten und der zweiten Elektrode (5, 6) angeordnet ist und den elektrischen Schaltkreis (7) schließt, und einer Messvorrichtung (9), die so konfiguriert ist, dass sie entweder den elektrischen Widerstand oder die Impedanz in dem elektrischen Schaltkreis erfasst; wobei:

i. das Prüfsystem (1) ferner mindestens eine Haltevorrichtung (10) aufweist, die so konfiguriert ist, dass sie die erste und die zweite Elektrode (5, 6) hält, die stationär und nebeneinander angeordnet sind, wobei ein vorgegebener Spalt (13) zwischen ihnen belassen wird, und die im Wesentlichen auf einer gleichen Ebene (a) liegen; **dadurch gekennzeichnet, dass**

ii. die erste und die zweite Elektrode (5, 6) und deren Haltevorrichtung (10) so konfiguriert sind, dass sie eine erste und dieselbe Fläche (11) des Reibungsmaterialblocks oder der -platte (4) jedes zu prüfenden Elements gegenüber dem Träger (3) gleichzeitig in Kontakt mit der ersten und der zweiten Elektrode (5, 6) bringen, um den elektrischen Schaltkreis (7) ausschließlich durch einen Abschnitt (12) des Reibungsmaterialblocks oder der -platte (4) zu schließen, der/die in dem Spalt zwischen der ersten und der zweiten Elektrode angeordnet ist.

2. Prüfsystem (1) nach Anspruch 1, **dadurch gekennzeichnet, dass** es ferner aufweist:

   iii. einen numerisch gesteuerten Manipulator (14), der so konfiguriert ist, dass er jedes zu prüfende Element (2) einzeln aus einem Sammel- oder Transportelement (15) entnimmt, um jedes zu prüfende Element (2) gegen das mindestens eine Paar von stationären ersten und zweiten Elektroden (5, 6) zu bringen; und
   iv. eine Verarbeitungseinheit (18), die mit der Messvorrichtung (9), besagtem elektrischen Schaltkreis (7) und besagtem Manipulator (14) verbunden ist, um diese zu steuern, und die so konfiguriert ist, dass sie zunächst die Art des Reibungsmaterials, das den Reibungsmaterialblock oder die Platte (4) jedes zu prüfenden Elements bildet, das gegen die erste und zweite Elektrode (5, 6) gebracht wird, auf der Grundlage des elektrischen Widerstands oder der Impedanz, der/die von der Messvorrichtung (9) erfasst wird, und schließlich über den Manipulator (14) die geprüften Elemente (2), die mit einer Art von Reibungsmaterial ausgestattet sind, die sich von einer gewünschten Art unterscheidet, aussortiert.

3. Prüfsystem (1) nach Anspruch 2, **dadurch gekennzeichnet, dass** es so konfiguriert ist, dass es eine Vielzahl von Bremselementen (2) am Ende einer Produktionslinie und/oder vor ihrer Verpackung parallel und/oder nacheinander prüft, um sie auszuliefern, wobei die Bremselemente (2) auf einem Förderer (15) liegend angeordnet sind und der Manipulator (14) so konfiguriert ist, dass er jeweils mindestens eines von ihnen an der Seite seines Trägers (3) hält, um jedes zu prüfende Bremselement (2) von dem Förderer (15) zu entnehmen, es auf der Seite des Reibungsmaterialblocks oder der - platte (4) desselben gegen das mindestens eine Paar aus einer ersten und einer zweiten Elektrode (5, 6) zu drücken, bis die Messvorrichtung (9) den elektrischen Widerstand oder die Impedanz erfasst hat, und jedes geprüfte Bremselement (2) entweder zu einer Sammelvorrichtung oder einem Behälterelement oder zu einem Ausschussbehälterelement (24) zurückzubringen.

4. Prüfsystem nach einem der vorhergehenden Ansprüche 1 bis 3, **dadurch gekennzeichnet, dass** der elektrische Generator (8) so konfiguriert ist, dass er an den elektrischen Schaltkreis eine vorher festgelegte Gleich- oder Wechselspannung, vorzugsweise Gleichspannung, anlegt; wobei die Messvorrichtung (9) so konfiguriert ist, dass sie, wenn die angelegte Spannung Gleichspannung ist, den zwischen der ersten und der zweiten Elektrode (5, 6) fließenden elektrischen Strom erfasst und den elektrischen Widerstand des Abschnitts (12) des Reibungsmaterialblocks oder der -platte (4), der/die zwischen der ersten und der zweiten Elektrode enthalten ist, durch Anwendung des Ohm'schen Gesetzes berechnet.

5. Prüfsystem nach Anspruch 4, **dadurch gekennzeichnet, dass** der elektrische Schaltkreis (7) zwei Zweige (20, 21) aufweist, die mit dem elektrischen Generator (8) parallel geschaltet sind, wobei ein erster Zweig (20) in Reihe einen vorher festgelegten und bekannten elektrischen Probenwiderstand (22), der vorzugsweise austauschbar ist, und ein zweiter Zweig (21) in Reihe die erste und zweite Elektrode (5, 6) und den zwischen ihnen festgelegten Spalt (13) enthält, wobei der Spalt (13) so konfiguriert ist, dass er durch den Reibungsmaterialblock oder die -platte (4) eines zu prüfenden Elements (2), das auf den Elektroden aufliegt, geschlossen wird.

6. Prüfsystem nach einem der vorhergehenden Ansprüche, **dadurch gekennzeichnet, dass** der Spalt (13) vorher festgelegt und konstant ist.

7. Prüfsystem nach Anspruch 2, **dadurch gekennzeichnet, dass** die Haltevorrichtung (10) aus einem Halteturm besteht, der in der Nähe sowohl des Manipulators (14) als auch des Sammel- oder Transportelements (15) für das zu prüfende Element (2) angeordnet ist; jede erste und zweite Elektrode (5, 6) von einem entsprechenden ersten und zweiten geführten Gleitelement (25, 26) unabhängig voneinander getragen wird, wobei das erste und zweite geführte Gleitelement (25, 26) von dem Halteturm (10) gegen die Wirkung elastischer Elemente (27) in einer Richtung senkrecht zu der Legeebene der Elektroden derart beweglich gehalten wird, dass der Spalt (13) zwischen den Elektroden konstant gehalten wird.

8. Prüfsystem nach Anspruch 7, **dadurch gekennzeichnet, dass** der Halteturm (10) von einem Sockel (28) verstellbar getragen wird und vorzugsweise einseitig gegenüber einer Vertikalen geneigt angeordnet ist.

9. Prüfsystem nach einem der vorhergehenden Ansprüche, **dadurch gekennzeichnet, dass** die Verarbeitungseinheit (18) mindestens ein Register (19) aufweist, das so konfiguriert ist, dass es Wertebereiche von durchschnittlichen elektrischen Widerstands-/Impedanzwerten jedes Typs des gewünschten Reibungsmaterials speichert, wobei diese Werte zuvor experimentell bestimmt worden sind; wobei die Verarbeitungseinheit (18) so konfiguriert ist, dass sie solche gespeicherten Werte mit denen vergleicht, die von der Messvorrichtung (9) erfasst werden, um zu entscheiden, ob das Reibungsmaterial des Elements (2), das gerade gegen die erste und zweite Elektrode (5, 6) angeordnet ist, akzeptabel ist oder nicht.

10. Verfahren zur Durchführung einer Online-Qualitätsprüfung von Reibungsmaterialblöcken oder -platten (4), die von einem Träger (3) getragen werden, insbesondere von Fahrzeugbremselementen wie Bremsbacken oder Bremsplatten, die jeweils einen Träger und einen Block oder eine Platte (4) aus einem Reibungsmaterial aufweisen, der/die von dem Träger getragen wird und aus einem Reibungsmaterial eines gewünschten Typs besteht, wobei das Verfahren den Schritt aufweist, jedes zu prüfende Element (2) in Kontakt mit mindestens einem Paar aus einer ersten und einer zweiten Elektrode (5, 6) zu bringen und einen elektrischen Strom (I) zwischen der ersten und der zweiten Elektrode fließen zu lassen, wenn das zu prüfende Element (2) in Kontakt mit der ersten und der zweiten Elektrode angeordnet ist; wobei das Prüfverfahren die folgenden Schritte aufweist:

a) Anordnen der ersten und der zweiten Elektrode (5, 6) stationär und nebeneinander, wobei ein vorgegebener Spalt (13) zwischen ihnen belassen wird, wobei die erste und die zweite Elektrode (5, 6) im Wesentlichen auf einer gleichen Ebene ($\alpha$) liegend angeordnet sind;

b) Bilden eines elektrischen Schaltkreises (7) mit der ersten und der zweiten Elektrode, der von einem elektrischen Generator (8) entweder in Gleichstrom oder in Wechselstrom, vorzugsweise in Gleichstrom, gespeist wird, wobei der elektrische Schaltkreis durch den Spalt (13) offen gelassen wird; **dadurch gekennzeichnet, dass** das Verfahren ferner die folgenden Schritte aufweist:

c) Inkontaktbringen einer ersten und derselben Fläche (11) des Reibungsmaterialblocks oder der -platte (4) jedes zu prüfenden Elements, die gegenüber dem Träger (3) angeordnet ist, mit der ersten und zweiten Elektrode (5, 6) gleichzeitig, um den Spalt (13) und den elektrischen Schaltkreis (7) ausschließlich durch einen Abschnitt (12) des Reibungsmaterialblocks oder der -platte (4) zu schließen, der in dem Spalt zwischen der ersten und zweiten Elektrode angeordnet ist;

d) Aktivieren des elektrischen Generators (8), um einen elektrischen Strom zu erzeugen, der zwischen der ersten und der zweiten Elektrode durch den Teil (12) des Reibungsmaterialblocks oder der -platte (4) fließt, der in dem Spalt (13) zwischen der ersten und der zweiten Elektrode angeordnet ist;

e) Erfassen eines elektrischen Widerstands oder einer Impedanz des zwischen der ersten und der zweiten Elektrode (5, 6) angeordneten Teils des Reibungsmaterials;

f) Feststellen der Art des Reibungsmaterials, aus dem der Reibungsmaterialblock oder die -platte (4) jedes zu prüfenden Elements (2) hergestellt ist, durch Vergleichen des in Schritt e) ermittelten Werts des elektrischen Widerstands oder der Impedanz mit Bereichen von Durchschnittswerten des elektrischen Widerstands oder der Impedanz einer Anzahl von verschiedenen Arten von Reibungsmaterial, die zuvor experimentell ermittelt und in einer Verarbeitungseinheit (18) gespeichert wurden.

11. Verfahren nach Anspruch 10, **dadurch gekennzeichnet, dass** es ferner den folgenden Schritt aufweist:
g) Aussortieren eines geprüften Elements (2), wenn die festgestellte Art des Reibungsmaterials des Reibungsmaterialblocks oder der -platte (4) sich von einer gewünschten Art des Reibungsmaterials unterscheidet, die zuvor in die Verarbeitungseinheit eingegeben wurde.

12. Verfahren nach Anspruch 10 oder 11, **dadurch gekennzeichnet, dass** eine Vielzahl von Bremselementen (2) parallel und/oder nacheinander am Ende einer Produktionslinie und/oder vor ihrer Verpackung zur Auslieferung geprüft werden, indem die zu prüfenden Bremselemente (2) auf einen Förderer (15) gelegt und mittels eines numerisch gesteuerten Manipulators (14) von dem Förderer zurückgezogen werden, um jedes der zu prüfenden Bremselemente auf der Seite des Reibungsmaterialblocks oder der -platte (4) desselben gegen das mindestens eine Paar aus einer ersten und einer zweiten Elektrode (5, 6) zu drücken, bis der elektrische Widerstand oder die Impedanz erfasst wird; nach dem Schritt f) wird jedes geprüfte Bremselement (2) entweder zu einer Sammelvorrichtung (15) oder einem Behälterelement zurückgebracht, wenn das festgestellte Reibungsmaterial ein gewünschtes ist, oder zu einem Ausschussbehälterelement (24), wenn das festgestellte Reibungsmaterial ein unerwünschtes ist.

13. Verfahren nach einem der vorhergehenden Ansprüche 10 bis 12, **dadurch gekennzeichnet, dass** es den Schritt (39) des experimentellen Testens des elektrischen Widerstands oder der Impedanz von Reibungsmaterialien bekannter Art aufweist, die zur Herstellung von Bremselementen (2) mit vorher festgelegtem Bremsverhalten verwendet werden können, um für jedes Reibungsmaterial bekannter Art Bereiche von Durchschnittswerten des elektrischen Widerstands oder der Impedanz festzulegen, die typisch und ausschließlich für diese bekannte Art von Reibungsmaterial geeignet sind; wobei diese Wertebereiche dann festgelegt werden, um sie mit den im Schritt e) festgelegten Werten zu vergleichen.

**14.** Verfahren nach einem der vorhergehenden Ansprüche 10 bis 13, **dadurch gekennzeichnet, dass** der Schritt e) in Gleichstrom ausgeführt wird, wobei ein elektrischer Schaltkreis (7) gebildet wird, der einen ersten und einen zweiten Zweig (20, 21) aufweist, die elektrisch parallel angeordnet sind, wobei der erste Zweig (20) mit einem vorgefertigten elektrischen Probenwiderstand (22) ausgestattet ist, der vorzugsweise austauschbar angeordnet ist, und der zweite Zweig (21) die erste und zweite Elektrode (5, 6) und den Spalt (13) dazwischen aufweist.

**Revendications**

**1.** Système d'essai (1) pour effectuer un essai de qualité en ligne de blocs ou de plaquettes (4) de matériau de frottement, en particulier appliqué à des éléments de freinage (2) de véhicules tels que des sabots de frein ou des plaquettes de frein comprenant chacun un support (3) et un bloc ou une plaquette (4) de matériau de frottement porté par le support, le système d'essai (1) comprenant au moins un couple d'une première et d'une deuxième électrode (5, 6) configurées pour coopérer simultanément en contact avec un élément (2) à tester, un circuit électrique (7) comprenant lesdites première et deuxième électrodes (5,6), ledit circuit électrique (7) étant normalement ouvert entre ladite première et ladite deuxième électrode (5,6), un générateur électrique (8) connecté électriquement audit circuit électrique (7) et configuré pour faire circuler un courant électrique (I) entre la première et la deuxième électrode lorsque l'élément à tester (2) est disposé en contact avec la première et la deuxième électrode (5,6) et ferme le circuit électrique (7), et un dispositif de mesure (9) configuré pour détecter soit la résistance électrique, soit l'impédance dans ledit circuit électrique ; dans lequel :

i. le système d'essai (1) comprend en outre au moins un dispositif de maintien (10) configuré pour maintenir lesdites première et deuxième électrodes (5, 6) disposées de manière stationnaire et côte à côte avec un espace préfixé (13) laissé entre elles et reposant sensiblement sur un même plan (a) ;
**caractérisé en ce que**
ii. lesdites première et deuxième électrodes (5, 6) et ledit dispositif de maintien (10) de celles-ci étant configurés pour recevoir une première et même face (11) du bloc ou de plaquette de matériau de frottement (4) de chaque élément à tester, à l'opposé du support (3), simultanément en contact avec lesdites première et deuxième électrodes (5, 6) pour fermer ledit circuit électrique (7) uniquement à travers une partie (12) du bloc ou la plaquette de matériau de frottement (4) disposée dans l'espace entre la première et la deuxième électrode.

**2.** Système d'essai (1) de la revendication 1, **caractérisé en ce qu'**il comprend en outre :

iii. un manipulateur à commande numérique (14) configuré pour retirer un à la fois chaque élément (2) à tester d'un élément de collecte ou de transport (15) pour amener chaque élément à tester (2) contre au moins un couple de première et deuxième électrodes stationnaires (5,6) ; et
iv. une unité de traitement (18) connectée au dispositif de mesure (9), audit circuit électrique (7) et audit manipulateur (14), pour les commander, et configurée pour détecter d'abord le type de matériau de frottement formant le bloc ou la plaquette de matériau de frottement (4) de chaque élément à tester amené contre la première et la deuxième électrode (5,6) sur la base de la résistance électrique ou de l'impédance détectée par le dispositif de mesure (9) et pour écarter éventuellement via ledit manipulateur (14) les éléments testés (2) équipés d'un type de matériau de frottement différent d'un type désiré.

**3.** Système d'essai (1) de la revendication 2, **caractérisé en ce qu'**il est configuré pour tester en parallèle et/ou séquentiellement une pluralité d'éléments de freinage (2) à la fin d'une ligne de production de ceux-ci et/ou avant leur conditionnement pour les livrer, les éléments de freinage (2) étant disposés en position couchée sur un convoyeur (15) et le manipulateur (14) étant configuré pour tenir au moins l'un d'entre eux à la fois sur le côté du support (3) de celui-ci pour retirer chaque élément de freinage (2) à tester du convoyeur (15), le presser sur le côté du bloc ou la plaquette de matériau de frottement contre ledit au moins un couple d'une première électrode (5,6) jusqu'à ce que le dispositif de mesure (9) ait détecté ladite résistance électrique ou impédance et ramener chaque élément de freinage testé (2) soit vers un dispositif ou un élément de boîte de collecte, soit vers un élément de boîte à rebuts (24).

**4.** Système d'essai de l'une quelconque des revendications précédentes de 1 à 3, **caractérisé en ce que** ledit générateur électrique (8) est configuré pour appliquer audit circuit électrique une tension préétablie soit en courant continu, soit en courant alternatif, de préférence en courant continu ; le dispositif de mesure (9) étant configuré, lorsque la tension appliquée est en courant continu, pour détecter le courant électrique établi entre la première et la deuxième électrode (5,6) et pour calculer la résistance électrique de ladite partie (12) du bloc ou la plaquette de matériau de frottement (4) compris entre ladite première et ladite deuxième électrode, en appliquant la loi d'Ohm.

5. Système d'essai selon la revendication 4, **caractérisé en ce que** ledit circuit électrique (7) comprend deux branches (20,21) connectées audit générateur électrique (8) en parallèle, une première branche (20) comprenant en série une résistance électrique d'échantillon préétablie et connue (22), de préférence remplaçable, et une deuxième branche (21) comprenant en série lesdites première et deuxième électrodes (5,6) et l'espace (13) établi entre elles, ledit espace (13) étant configuré pour être fermé par le bloc ou la plaquette de matériau de frottement (4) d'un élément (2) à l'essai reposant sur lesdites électrodes.

6. Système d'essai selon l'une quelconque des revendications précédentes, **caractérisé en ce que** l'espace (13) est préétabli et constant.

7. Système d'essai selon la revendication 2, **caractérisé en ce que** ledit dispositif de maintien (10) consiste en une tour de maintien disposée à proximité du manipulateur (14) et dudit élément de collecte ou de transport (15) pour l'élément (2) à tester ; chaque première et deuxième électrode (5,6) étant portée par un premier et deuxième élément coulissant guidé (25,26) correspondant indépendamment l'un de l'autre, le premier et deuxième élément coulissant guidé (25,26) étant supporté par la tour de maintien (10) mobile contre l'action d'éléments élastiques (27) dans une direction perpendiculaire audit plan de pose des électrodes de manière à maintenir constant ledit espace (13) entre les électrodes.

8. Système d'essai selon la revendication 7, **caractérisé en ce que** ladite tour de maintien (10) est supportée par un piédestal (28) de manière réglable et est de préférence inclinée d'un côté par rapport à une ligne verticale.

9. Système d'essai selon l'une quelconque des revendications précédentes, **caractérisé en ce que** ladite unité de traitement (18) comprend au moins un registre (19) configuré pour y mémoriser des plages de valeurs moyennes de résistance électrique / impédance de chaque type de matériau de frottement souhaité, ces valeurs ayant été préalablement déterminées expérimentalement ; l'unité de traitement (18) étant configurée pour comparer ces valeurs mémorisées avec celles détectées par le dispositif de mesure (9) pour décider si le matériau de frottement de l'élément (2) actuellement disposé contre la première et la deuxième électrode (5,6) est acceptable ou non.

10. Procédé pour effectuer un essai de qualité en ligne de blocs ou de plaquettes (4) de matériau de frottement portés par un support (3), en particulier d'éléments de freinage de véhicules tels que des sabots de frein ou des plaquettes de frein comprenant chacun un support et un bloc ou une plaquette (4) de matériau de frottement porté par le support et constitué d'un matériau de frottement d'un type souhaité, le procédé comprend l'étape consistant à mettre chaque élément (2) à tester en contact avec au moins un couple d'une première et d'une deuxième électrode (5,6) et à faire circuler un courant électrique (I) entre la première et la deuxième électrode lorsque l'élément à tester (2) est placé en contact avec la première et la deuxième électrode ; dans lequel le procédé d'essai comprend les étapes consistant à :

a) disposer la première et la deuxième électrode (5,6) de façon fixe et côte à côte avec un espace préfixé (13) laissé entre elles, la première et la deuxième électrode (5,6) étant disposées sensiblement sur un même plan (a) ;
b) former avec la première et la deuxième électrode un circuit électrique (7) alimenté par un générateur électrique (8) en courant continu ou alternatif, de préférence en courant continu, le circuit électrique étant laissé ouvert par ledit espace (13) ; **caractérisé en ce que** ledit procédé comprend en outre les étapes consistant à :
c) amener une première et même face (11) du bloc ou la plaquette de matériau de frottement (4) de chaque élément à tester, disposée à l'opposé du support (3), en contact avec ladite première et deuxième électrode (5,6) simultanément, pour fermer ledit espace (13) et ledit circuit électrique (7) uniquement à travers une partie (12) du bloc ou la plaquette de matériau de frottement (4) disposée dans l'espace entre la première et deuxième électrode ;
d) activer le générateur électrique (8) de manière à établir un courant électrique circulant entre ladite première et deuxième électrode à travers ladite partie (12) du bloc ou la plaquette de matériau de frottement (4) disposé dans l'espace (13) entre la première et la deuxième électrode ;
e) détecter une résistance électrique ou une impédance de ladite partie de matériau de frottement disposée entre la première et la deuxième électrode (5,6) ;
f) établir le type de matériau de frottement dont est constitué le bloc ou la plaquette de matériau de frottement (4) de chaque élément (2) à tester, en comparant la valeur de la résistance électrique ou de l'impédance détectée à l'étape e) avec des plages de valeurs moyennes de résistance électrique ou d'impédance d'un certain nombre de types différents de matériau de frottement préalablement établies expérimentalement et mémorisées dans une unité de traitement (18).

11. Procédé de la revendication 10, **caractérisé en ce qu'**elle comprend en outre l'étape consistant à :
g) rejeter un élément testé (2) si le type de matériau de frottement établi du bloc ou la plaquette de matériau de frottement (4) est différent d'un type de matériau de frottement souhaité introduit précédemment dans ladite unité de traitement.

12. Procédé de la revendication 10 ou 11, **caractérisé en ce qu'**une pluralité d'éléments de freinage (2) sont testés en parallèle et/ou séquentiellement à la fin d'une ligne de production de ceux-ci et/ou avant leur emballage pour les livrer, en déposant les éléments de freinage à tester (2) sur un convoyeur (15) et en les retirant du convoyeur au moyen d'un manipulateur à commande numérique (14) pour presser chacun des éléments de freinage à tester, du côté du bloc ou la plaquette de matériau de frottement (4), contre ledit au moins un couple d'une première et d'une deuxième électrode (5, 6) jusqu'à ce que ladite résistance ou impédance électrique soit détectée ; après l'étape f), chaque élément de freinage testé (2) est ramené soit à un dispositif de collecte (15), soit à un élément de boîte si le matériau de frottement établi est souhaité, ou vers un élément de boîte à rebuts (24) si le matériau de frottement établi est indésirable.

13. Procédé de l'une quelconque des revendications précédentes de 10 à 12, **caractérisé en ce qu'**elle comprend l'étape (39) consistant à tester expérimentalement la résistance électrique ou l'impédance de matériaux de frottement de types connus et adaptés à la fabrication d'éléments de frein (2) ayant un comportement de freinage préétabli afin d'établir, pour chaque matériau de frottement de type connu, des plages de valeurs moyennes de la résistance électrique ou de l'impédance typiques et propres uniquement à ce type connu de matériau de frottement ; ces plages de valeurs étant ensuite fixées afin de les comparer avec les valeurs établies à l'étape e).

14. Procédé selon l'une des revendications précédentes de 10 à 13, **caractérisé en ce que** ladite étape e) est réalisée en courant continu, formant un circuit électrique (7) comprenant une première et une deuxième branche (20,21) disposées électriquement en parallèle, la première branche (20) étant équipée d'une résistance électrique d'échantillonnage préfixée (22), de préférence disposée de manière remplaçable, et ladite deuxième branche (21) portant le long d'elle ladite première et deuxième électrode (5,6) et ledit espace (13) entre celles-ci.

EP 4 257 840 B1

FIG. 1

FIG. 2

FIG. 3

FIG. 4

EP 4 257 840 B1

FIG. 5

FIG. 6

FIG. 7

EP 4 257 840 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0483927 A